# EUROPÄISCHE PATENTSCHRIFT

(11) **EP 3 663 722 B1**
(45) Veröffentlichungstag und Bekanntmachung des Hinweises auf die Patenterteilung: **26.05.2021**
(21) Anmeldenummer: 18209910.1
(22) Anmeldetag: 03.12.2018
(51) Int. Cl.: G01D 5/14, G01D 18/00

(54) **VERFAHREN ZUR AUTOMATISCHEN KALIBRIERUNG EINES MAGNETISCHEN SENSORS UND MAGNETISCHER SENSOR**
METHOD FOR AUTOMATED CALIBRATION OF A MAGNETIC SENSOR AND MAGNETIC SENSOR
PROCÉDÉ D'ÉTALONNAGE AUTOMATIQUE D'UN CAPTEUR MAGNÉTIQUE ET CAPTEUR MAGNÉTIQUE

(43) Veröffentlichungstag der Anmeldung: 10.06.2020
(73) Patentinhaber: SICK AG, 79183 Waldkirch (DE)
(72) Erfinder: Bludau, Thomas, 79111 Denzlingen (DE)

(56) Entgegenhaltungen:
- EP-A1- 1 826 533
- WO-A1-2009/078048
- DE-A1-102013 009 862

## Beschreibung

Die Erfindung betrifft ein Verfahren zur Kalibrierung eines magnetischen Sensors für die Bestimmung einer Position eines Gebermagneten entlang einer Strecke nach dem Oberbegriff des Anspruchs 1, sowie einen magnetischen Sensor zur Durchführung des Verfahrens.

Magnetische Sensoren werden häufig an Arbeitszylindern eingesetzt, um die Position eines einen Gebermagneten tragenden Hubkolbens erfassen zu können. Dabei ist es in vielen Anwendungen erforderlich, die genaue Position des Kolbens, respektive Gebermagneten, über eine Strecke kontinuierlich erfassen zu können. Ein solcher Sensor ist beispielsweise aus der EP 2 166 313 A1 bekannt und weist eine Reihe Hall-Sensorelemente auf, die eine radiale Komponente des Magnetfeldes erfassen. Ein Sensorelementsignal eines solchen Hall-Sensorelements hat einen quasilinearen Bereich, der für sich einen Teilbereich des Hubweges abdeckt, so dass auf diesem Teilbereich die Gebermagnetposition kontinuierlich erfasst werden kann.

In einer initialen Kalibration werden mit einem Kalibrationshub des Kolbens die Sensorelementsignale auf die Position des Gebermagneten kalibriert. Die Kalibration umfasst dabei die Bestimmung von Polynomkoeffizienten, um ein Polynom an den quasilinearen Bereich anzupassen. Diese Anpassung ist abhängig von der Form des Magnetfeldes des Gebermagneten, die wiederum auch von der Zylindergeometrie abhängt. Die Koeffizienten passen je nach Kolben mal besser mal schlechter. Das kann zu einem hohen Linearitätsfehler führen mit entsprechend ungenauer Kolbenpositionsbestimmung. Solche Fehlerursachen für die Kolbenpositionsbestimmung können durch passendere Koeffizienten vermieden oder zumindest reduziert werden.

Aus der WO2009/078048 ist ein magnetischer Sensor bekannt, bei dem mittels einer Vielzahl von Hallsensoren eine Kolbenposition ermittelt wird. Zur Kalibrierung kann eine Schieblehre angeflanscht werden, von der Positioswerte abgelesen werden, die in eine Kalibriertabelle eingetragen werden und abgespeichert werden.

Ausgehend davon ist es Aufgabe der Erfindung, ein verbessertes Verfahren zur Kalibrierung eines magnetischen Sensors vorzuschlagen, sowie einen Sensor bereitzustellen, mit dem ein solches verbessertes Kalibrationsverfahren durchführbar ist.

Diese Aufgabe wird gelöst durch Verfahren mit den Merkmalen des Anspruchs 1 und einen Sensor mit den Merkmalen des Anspruchs 5.

Ein wesentlicher Vorteil des erfindungsgemäßen Verfahrens ist, dass die aufwändige Kalibration für jeden einzelnen Zylinder entfällt. Stattdessen kann der Sensor einfach in eine Anwendung, also an einen Zylinder, angebaut werden und die Kalibrierung erfolgt mit den ersten Kolbenhüben. Dabei spielt die Zylindergeometrie keine Rolle.

Daraus ergibt sich der weitere Vorteil, dass die erfindungsgemäße Kalibrierung immer wieder während des Betriebes erfolgen kann. Jeder Kolbenhub kann zu einer Kalibrierung genutzt werden, sofern die Kolbenbewegung im zu kalibrierenden Bereich mit konstanter Geschwindigkeit erfolgte, was aber im Verfahren geprüft wird. Die Kalibrierung kann insgesamt automatisch erfolgen.

Bei ständiger Wiederholung der Kalibrierung können Alterungs- und Temperatureffekte eliminiert werden.

Insgesamt werden mit dem erfindungsgemäßen Verfahren die Koeffizienten bestmöglich angepasst, auch an sich verändernde Bedingungen.

Die Wiederholung der Kalibrierung während der Laufzeit kann vorbestimmt sein, also zu bestimmten Zeiten erfolgen oder in bestimmten Zeitabständen (zum Beispiel Stunden oder Tage) oder auch nach einer bestimmten Anzahl von Kolbenhüben, also nach einer bestimmten Arbeitsdauer. Bevorzugt ist die Wiederholrate einstellbar.

Vorteilhafterweise werden zur Bestimmung, ob eine konstante Geschwindigkeit des Gebermagneten vorliegt, so dass die Kalibrierung erfolgen kann, in Schritt f) zwei Zeitintervalle T1 und T2 verglichen werden, wobei die Zeitintervalle sich jeweils aus einer Zeitdifferenz zweier Zeitpunkte tx berechnen, die zu gleich großen Sensorelementsignalen benachbarter Sensorelemente gehören. Wenn die Zeiten gleich sind, dann liegt konstante Geschwindigkeit vor.

Gegenstand der Erfindung ist auch ein magnetischer Sensor, der so ausgebildet ist, dass das erfindungsgemäße Verfahren durchgeführt werden kann. Der Sensor weist wenigstens drei gleichartige Sensorelemente entlang der Strecke auf, wobei die Sensorelemente jeweils an ihrem Ort das Magnetfeld des Gebermagneten detektieren können. Weiter weist der Sensor eine Auswerteelektronik auf, wobei die Sensorelemente entlang der Strecke in einem äquidistanten Abstand angeordnet sind und jedes Sensorelement eine Komponente des Magnetfeldes erfasst und ein von der Position des Gebermagneten abhängiges Sensorelementsignal erzeugt, sowie einen Speicher zum Speichern der Sensorelementsignale. Erfindungsgemäß ist die Auswerteelektronik ausgebildet, um während des Bewegens des Gebermagneten Zeit-Signal-Wertepaare zu speichern in einem den jeweiligen Messbereich bildenden Teil eines Sensorelementsignals. Ein Zeit-Signal-Wertepaar besteht aus einem Zeitpunkte tx, zu dem das jeweilige Sensorelementsignal erfasst wird und dem zugehörigen Sensorelementsignal. Die Auswerteelektronik ist weiter ausgebildet zu ermitteln, ob der Gebermagnet mit konstanter Geschwindigkeit an den Sensorelementen vorbeibewegt wird, und bei Vorliegen einer konstanten Geschwindigkeit die relativen Gebermagnetpositionen zwischen jeweils zwei benachbarten Sensorelementen aus den Zeitpunkten tx zu ermitteln. Weiter ist die Auswerteelektronik ausgebildet, aus den Zeit-Signal-Wertepaaren und der zugehörigen, ermittelten Magnetgeberposition ein Polynom an den Messbereich jedes Sensorelementsignals durch Ermitteln von Polynomkoeffizienten zu approximieren. Schließlich ist die Auswerteelektronik ausgebildet, in einem Arbeitsbetrieb mittels des approximierten Polynoms über eines der Sensorelementsignale Positionswerte des Gebermagneten auszugeben.

Die Vorteile wurden oben bereits in Zusammenhang mit dem Kalibrierverfahren erläutert.

Bevorzugt sind die Sensorelemente als Hall-Sensorelemente ausgebildet und erfassen eine radiale Komponente des Magnetfelds.

Im Folgenden wird die Erfindung anhand eines Ausführungsbeispiels unter Bezugnahme auf die Zeichnung im Einzelnen erläutert. In der Zeichnung zeigen:
- Fig. 1: eine schematische Darstellung eines erfindungsgemäßen magnetischen Sensors;
- Fig. 2: eine schematische Darstellung von Sensorelementsignalen in Abhängigkeit der Position des Gebermagneten zur Erläuterung der Kalibrierung.

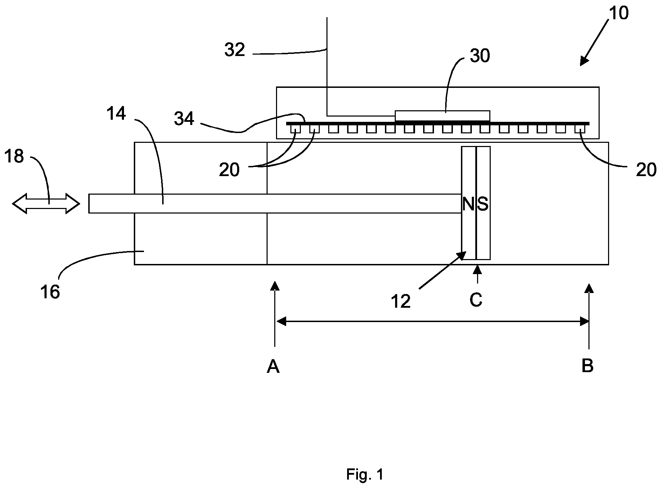

Ein in Fig. 1 dargestellter erfindungsgemäßer magnetischer Sensor 10 dient dazu, die Position C eines Gebermagneten 12 entlang einer Strecke AB zu bestimmen, wobei der Gebermagnet 12 auf einem Kolben 14 eines Arbeitszylinders 16 montiert ist. Derartige Arbeitszylinder werden beispielsweise in automatisiert arbeitenden Maschinen, wie Robotern und dergleichen, eingesetzt. Mit dem Sensor 10 werden die Kolbenpositionen erfasst, wenn sich der Kolben in Kolbenrichtung 18 bewegt.

Der Sensor 10 weist einzelne, wenigstens drei, Sensorelemente auf, die bevorzugt als Hall-Sensoren 20 ausgebildet sind und entlang der Messstrecke AB äquidistant angeordnet sind. Die Hall-Sensoren 20 sind mit einer bevorzugt als Mikrocontroller ausgebildeten Auswerteelektronik 30 verbunden. Über eine Leitung 32 werden dem erfindungsgemäßen Sensor 10 alle notwendigen Daten und Versorgungsspannungen zugeführt sowie Positionssignale, die in der Auswerteelektronik 30 bestimmt werden, ausgegeben.

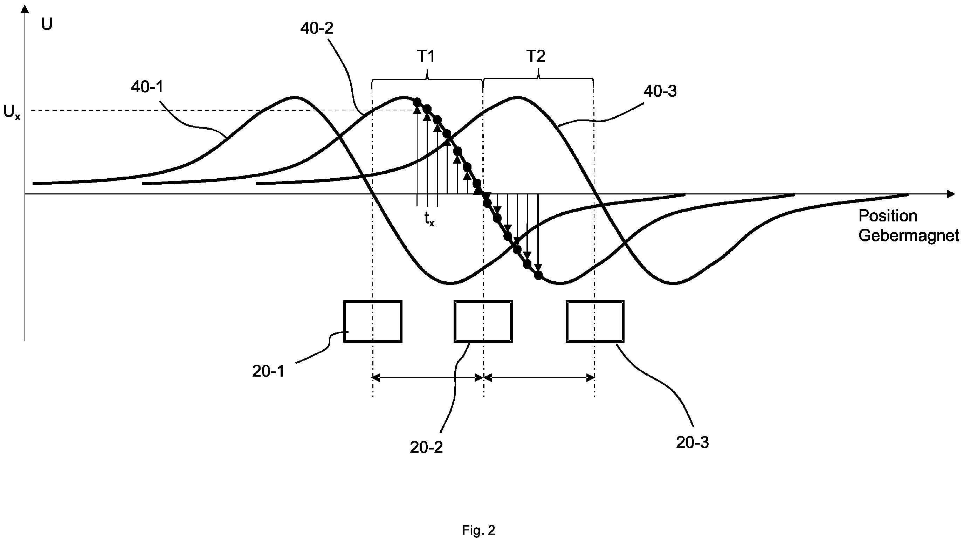

Die Hall-Sensoren 20 und die Auswerteelektronik 30 sind auf einer Leiterplatte 34 angeordnet. Typische Hallsignale, die von den Hall-Sensoren 20 in Abhängigkeit des Weges ausgegeben werden, sind in den Fig. 2 dargestellt, wobei die Signale von lediglich drei Sensorelementen 20 dargestellt sind. Jede dieser Kurven 40-1, 40- 2 und 40-3 entspricht dabei einem Hallsignal U eines bestimmten Hall-Sensors 20-1, 20-2 und 20-3, wobei die dargestellten Signalverläufe jeweils schematisch einem Signalverlauf entsprechen, wenn die Hall-Sensoren die radiale Komponente des Magnetfeldes des Gebermagneten 12 erfassen, dessen Nord-Süd-Richtung in Kolbenrichtung 18 liegt. "Radial" heißt also senkrecht zur Kolbenrichtung 18. In der Regel wird als Messbereich eines einzelnen Hallelements 20-1, 20-2 oder 20-3 zur Positionsbestimmung lediglich der in etwa lineare Bereich zwischen den beiden Extrema einer Kurve 40-1, 40-2 bzw. 40-34 genutzt, weshalb die Hallelemente 20-1, 20-2 und 20-3 und damit ihre Signalverläufe 40-1, 40-2 und 40-3 derart beabstandet sind, dass wenn die gemessene Position das Ende eines solchen quasi linearen Bereichs erreicht, dann der quasi lineare Bereich des benachbarten Hall-Sensors beginnt und zur Positionsbestimmung dann der benachbarte Hall-Sensor ausgewertet wird. Messtechnisch gesehen wird eine Grenze des Messbereichs zwischen zwei Sensorelementen dort definiert, wo die Signale zweier benachbarten Sensorelementen 20-1 und 20-2 oder 20-2 und 20-3 betragsmäßig gleich sind.

Im Folgenden wird das erfindungsgemäße Verfahren zur Kalibrierung des magnetischen Sensors 10 erläutert. Das Verfahren umfasst folgende Schritte:
Im ersten Schritt a) werden die Sensorelemente 20 entlang der Strecke AB in einem äquidistanten Abstand angeordnet. Das ist im dargestellten Ausführungsbeispiel im Sensor 10 durch das Design des Sensors 10 und der Anordnung des Sensors 10 an den Arbeitszylinder 16 erfolgt.

Im nächsten Schritt b) wird der Kolben 14 und damit der Gebermagnet 12 entlang der Strecke AB bewegt. Es wird also ein Kolbenhub durchgeführt.

Während des Kolbenhubs wird in einem Schritt c) eine Komponente des Magnetfeldes, hier die Radialkomponente durch die Sensorelemente 20 erfasst und abhängig von der Position des Gebermagneten 12 Sensorelementsignale von jedem Sensorelement bereitgestellt. In Fig. 2 sind das die Sensorelementsignale (Hallsignale) 40-1, 40-2 und 40-3, die jeweils von den Hallelementen 20-1, 20-2 bzw. 20-3 erzeugt werden, wenn der Gebermagnet vorbeibewegt wird. Die Sensorelementsignale 40-1, 40-2 und 40-3 werden gespeichert.

Die Speicherung der Signale braucht nur in den Messbereichen erfolgen, also nur in den quasilinearen Bereichen. Die Speicherung erfolgt dabei durch Erfassung von Zeit-Signal-Wertepaaren in einem Schritt e) und deren Speicherung. Ein Zeit-Signal-Wertepaar besteht aus einem Zeitpunkt tx und einem zu diesem Zeitpunkt gehörenden Sensorelementsignal Ux. Die Zeit-Signal-Wertepaare werden während des Bewegens des Gebermagneten 12 erfasst und gespeichert. Dabei werden nur Zeit-Signal-Wertepaare aus den Messbereichen (quasilinearen Bereiche) der Sensorelementsignale 40-1, 40-2, und 40-3 erfasst und gespeichert.

In einem weiteren Schritt f) wird ermittelt, ob der Gebermagnet 12 mit konstanter Geschwindigkeit an den Sensorelementen 20 vorbeibewegt wird. Dies geschieht durch Vergleich von zwei Zeitintervallen T1 und T2. Ein solches Zeitintervall ist die Zeitdifferenz zwischen zwei Zeitpunkten, die zu gleich großen Sensorelementsignalen benachbarter Sensorelemente gehören. Im Ausführungsbeispiel sind das die einfach zu bestimmenden Zeitpunkte, an denen die Signale ihren Nulldurchgang haben. Wenn die Zeitintervalle T1 und T2 gleich sind geht man davon aus, dass der Kolben sich mit konstanter Geschwindigkeit bewegt hat.

Wenn die Kolbengeschwindigkeit konstant ist, dann wird in einem weiteren Schritt g) ermittelt, welche Gebermagnetpositionen den Zeitpunkten tx aus den Zeit-Signal-Wertepaaren entsprechen. Das ist einfach aus dem Abstand der Sensorelemente 20 und der Anzahl Messpunkte zwischen zwei Sensorelementen, also der Anzahl Messpunkte in einem Zeitintervall T1 bzw. T2 zu bestimmen.

Mit dieser Kenntnis wird schließlich in einem Schritt h) ein Polynom an den quasilinearen Teil (Messbereich) eines Sensorelementsignals jeden Sensorelements 20-1, 20-2, 20-3 approximiert. Dies erfolgt durch Ermitteln von Polynomkoeffizienten aus den Zeit-Signal-Wertepaaren und der jeweils zugehörigen, nach Schritt g) ermittelten Gebermagnetposition. Auf diese Weise ist jedem Wert des Sensorelementsignals U in dem quasilinearen Abschnitt eine Gebermagnetposition zugeordnet und der Sensor 10 kalibriert.

Diese Kalibrierung kann in laufendem Betrieb automatisch und immer wiederkehrend erfolgen, so dass unabhängig von sich ändernden Umgebungsbedingungen (Temperatur, Alterung, etc.) stets eine korrekte Kalibrierung vorliegt.

Für die Kalibrierung ist kein gesonderter Kalibriermodus notwendig. Die Kalibrierung kann automatisch bei Inbetriebnahme mit den ersten Kolbenhüben gestartet werden und kann parallel zum Arbeitsbetrieb erfolgen.

## Patentansprüche

1. Verfahren zur Kalibrierung eines magnetischen Sensors (10) für die Bestimmung einer Position eines Gebermagneten (12) entlang einer Strecke (AB), wobei der Sensor (10) wenigstens drei gleichartige Sensorelemente (20, 20-1, 20-2, 20-3) entlang der Strecke (AB) aufweist, die jeweils an ihrem Ort das Magnetfeld des Gebermagneten (12) detektieren können und der Sensor eine Auswerteelektronik (30) aufweist, wobei das Verfahren die Schritte umfasst:
a) Anordnen der Sensorelemente (20-1, 20-2, 20-3) entlang der Strecke in einem äquidistanten Abstand,
b) Bewegen des Gebermagneten (12) entlang der Strecke (AB),
c) Erfassen einer Komponente des Magnetfeldes durch die Sensorelemente (20-1, 20-2, 20-3) und Erzeugen eines von der Position des Gebermagneten (12) abhängigen Sensorelementsignals (40-1, 40-2, 40-3) von jedem Sensorelement (20-1, 20-2, 20-3) in zeitlich äquidistanten Schritten (tx) und Speichern der Sensorelementsignale (40-1, 40-2, 40-3),
d) wobei die jeweiligen Signalverläufe (40-1, 40-2 und 40-3) in einem Teilbereich einen in etwa linearen Bereich aufweisen und dieser Bereich als Messbereich genutzt wird und wobei die Sensorelemente (20-1, 20-2, 20-3) derart angeordnet sind, dass benachbarte Messbereiche so aneinandergrenzen, dass wenn die gemessene Position das Ende eines solchen quasi linearen Bereichs erreicht, dann der quasi lineare Bereich des benachbarten Hall-Sensors beginnt,
e) Erfassen von Zeit-Signal-Wertepaaren in den Messbereichen während des Bewegens des Gebermagneten (12) durch Speichern der Zeitpunkte (tx), zu denen das jeweilige Sensorelementsignal (40-1, 40-2 bzw. 40-3) erfasst wird und Speichern des zu dem jeweiligen Zeitpunkt (tx) zugehörigen Sensorelementsignals (Ux),
f) Ermitteln, ob der Gebermagnet (12) mit konstanter Geschwindigkeit an den Sensorelementen (20-1, 20-2, 20-3) vorbeibewegt wird,
g) und bei Vorliegen einer konstanten Geschwindigkeit, Ermitteln, welche Gebermagnetpositionen zwischen jeweils zwei benachbarten Sensorelementen (20-1 und 20-2; 20-2 und 20-3) den Zeitpunkten (tx) entsprechen,
h) Approximieren eines Polynoms an das Sensorelementsignal (40-1, 40-2, 40-3) jeden Sensorelements (20-1, 20-2, 20-3) in den Messbereichen durch Ermitteln von Polynomkoeffizienten in einem Kalibrationshub des Permanentmagneten (12) aus den Wertepaaren und der jeweils zugehörigen, nach Schritt g) ermittelten Gebermagnetpositionen.

2. Verfahren nach Anspruch 1, **dadurch gekennzeichnet, dass** die Schritte e) bis h) während eines laufenden Arbeitsbetriebs ständig wiederholt werden.

3. Verfahren nach Anspruch 2, **dadurch gekennzeichnet, dass** die Wiederholfrequenz vorbestimmt ist und bevorzugt einstellbar ist.

4. Verfahren nach einem der vorhergehenden Ansprüche, **dadurch gekennzeichnet, dass** in Schritt f) zur Ermittlung einer konstanten Geschwindigkeit zwei Zeitintervalle (T1 und T2) verglichen werden, wobei die Zeitintervalle sich jeweils aus einer Zeitdifferenz zweier Zeitpunkte berechnen, die zu gleich großen Sensorelementsignalen benachbarter Sensorelemente gehören.

5. Magnetischer Sensor zur Durchführung eines Verfahrens nach einem der vorhergehenden Ansprüche zur Bestimmung einer Position eines Gebermagneten (12) entlang einer Strecke (AB), wobei der Sensor (10) wenigstens drei gleichartige Sensorelemente (20-1, 20-2, 20-3) entlang der Strecke aufweist, die jeweils an ihrem Ort das Magnetfeld des Gebermagneten (12) detektieren können und der Sensor (10) eine Auswerteelektronik (30) aufweist, wobei die Sensorelemente (20-1, 20-2, 20-3) entlang der Strecke (AB) in einem äquidistanten Abstand angeordnet sind und jedes Sensorelement (20-1, 20-2, 20-3) eine Komponente des Magnetfeldes erfasst und ein von der Position des Gebermagneten (12) abhängiges Sensorelementsignal (40-1, 40-2, 40-3) erzeugt, mit einem Speicher zum Speichern der Sensorelementsignale (40-1, 40-2, 40-3), wobei die jeweiligen Signalverläufe (40-1, 40-2 und 40-3) in einem Teilbereich einen in etwa linearen Bereich aufweisen und dieser Bereich als Messbereich genutzt wird und wobei die Sensorelemente (20-1, 20-2, 20-3) derart angeordnet sind, dass benachbarte Messbereiche so aneinandergrenzen, dass wenn die gemessene Position das Ende eines solchen quasi linearen Bereichs erreicht, dann der quasi lineare Bereich des benachbarten Hall-Sensors beginnt, wobei
- die Auswerteelektronik (30) ausgebildet ist, während des Bewegens des Gebermagneten (12) Zeit-Signal-Wertepaare in den Messbereichen zu erfassen und zu speichern, wobei ein Zeit-Signal-Wertepaar aus einem Zeitpunkt (tx), an dem das jeweilige Sensorelementsignal (40-1, 40-2, 40-3) erfasst wird und aus dem zugehörigen Sensorelementsignal (Ux) besteht, und
- dass die Auswerteelektronik (30) weiter ausgebildet ist, zu Ermitteln, ob der Gebermagnet (12) mit konstanter Geschwindigkeit an den Sensorelementen (20-1, 20-2, 20-3) vorbeibewegt wird, und bei Vorliegen einer konstanten Geschwindigkeit zu ermitteln, welche Gebermagnetpositionenen zwischen jeweils zwei benachbarten Sensorelementen (20-1 und 20-2, 20-2 und 20-3) den Zeitpunkten (tx) entsprechen und
- die Auswerteelektronik (30) weiter ausgebildet ist, aus den Zeit-Signal-Wertepaaren und der zugehörigen ermittelten Magnetgeberposition ein Polynom an den Messbereich jedes Sensorelementsignals (40-1, 40-2, 40-3) durch Ermitteln von Polynomkoeffizienten zu approximieren und
- die Auswerteelektronik (30) weiter ausgebildet ist, in einem Arbeitsbetrieb mittels des approximierten Polynoms über eines der Sensorelementsignale (40-1, 40-2, 40-3) Positionswerte des Gebermagneten (12) auszugeben.

6. Sensor nach Anspruch 5, **dadurch gekennzeichnet, dass** die Sensorelemente Hall-Sensorelemente sind.

7. Sensor nach einem der vorhergehenden Ansprüche 5 oder 6, **dadurch gekennzeichnet, dass** die Sensorelemente eine radiale Komponente des Magnetfelds erfassen.

8. Sensor nach einem der vorhergehenden Ansprüche 5 bis 7, **dadurch gekennzeichnet, dass** die Auswertelektronik als integrierter Schaltkreis ausgebildet ist.

## Claims

1. Method for calibrating a magnetic sensor (10) for determining a position of a encoder magnet (12) along a path (AB), the sensor (10) having at least three similar sensor elements (20, 20-1, 20-2, 20-3) along the path (AB), which can each detect the magnetic field of the encoder magnet (12) at their location, and the sensor having evaluation electronics (30), the method comprising the steps:
a) arranging the sensor elements (20-1, 20-2, 20-3) along the path at an equidistant distance,
b) moving the encoder magnet (12) along the path (AB),
c) sensing a component of the magnetic field by the sensor elements (20-1, 20-2, 20-3) and generating a sensor element signal (40-1, 40-2, 40-3) from each sensor element (20-1, 20-2, 20-3) in time-equidistant steps (tx) dependent on the position of the encoder magnet (12) and storing the sensor element signals (40-1, 40-2, 40-3),
d) wherein the respective signal waveforms (40-1, 40-2 and 40-3) have an approximately linear range in a partial range and this range is used as a measuring range and wherein the sensor elements (20-1, 20-2, 20-3) are arranged in such a way that adjacent measuring ranges adjoin one another in such a way that when the measured position reaches the end of such a quasi-linear range, then the quasi-linear range of the adjacent Hall sensor begins,
e) detecting time-signal-value pairs in the measuring ranges during the movement of the encoder magnet (12) by storing the times (tx) at which the respective sensor element signal (40-1, 40-2 or 40-3) is detected and storing the sensor element signal (Ux) associated with the respective time (tx),
f) determining whether the encoder magnet (12) is moved past the sensor elements (20-1, 20-2, 20-3) at a constant velocity,
g) and in the presence of a constant velocity, determining which encoder magnet positions between each two adjacent sensor elements (20-1 and 20-2; 20-2 and 20-3) correspond to the points in time (tx),
h) approximating a polynomial to the sensor element signal (40-1, 40-2, 40-3) of each sensor element (20-1, 20-2, 20-3) in the measurement ranges by determining polynomial coefficients in a calibration stroke of the permanent magnet (12) from the pairs of values and the respective associated encoder magnet positions determined according to step g).

2. Method according to claim 1, **characterized in that** the steps e) to h) are repeated continuously during an ongoing working operation.

3. Method according to claim 2, **characterized in that** the repetition frequency is predetermined and preferably adjustable.

4. Method according to one of the preceding claims, **characterized in that**, in step f), two time intervals (T1 and T2) are compared in order to determine a constant velocity, the time intervals being calculated in each case from a time difference between two points in time belonging to sensor element signals of equal magnitude from adjacent sensor elements.

5. Magnetic sensor for carrying out a method according to one of the preceding claims for determining a position of an encoder magnet (12) along a path (AB), the sensor (10) having at least three similar sensor elements (20-1, 20-2, 20-3) along the path, which can each detect the magnetic field of the sensor magnet (12) at their location, and the sensor (10) having evaluation electronics (30), the sensor elements (20-1, 20-2, 20-3) being arranged at an equidistant distance along the path (AB), and each sensor element (20-1, 20-2, 20-3) detects a component of the magnetic field and generates a sensor element signal (40-1, 40-2, 40-3) dependent on the position of the encoder magnet (12), comprising a memory for storing the sensor element signals (40-1, 40-2, 40-3), wherein the respective signal waveforms (40-1, 40-2 and 40-3) having an approximately linear range in a partial range and this range being used as a measuring range, and the sensor elements (20-1, 20-2, 20-3) being arranged in such a way that adjacent measuring ranges adjoin one another in such a way that when the measured position reaches the end of such a quasi-linear range, then the quasi-linear range of the adjacent Hall sensor begins, wherein
- the evaluation electronics (30) are designed to detect and store time-signal-value pairs in the measuring ranges during the movement of the sensor magnet (12), a time-signal-value pair consists of a time (tx) at which the respective sensor element signal (40-1, 40-2, 40-3) is detected and of the associated sensor element signal (Ux), and
- the evaluation electronics (30) are further designed to determine whether the sensor magnet (12) is moved past the sensor elements (20-1, 20-2, 20-3) at a constant velocity, and, if a constant velocity is present, to determine which sensor magnet positions between in each case two adjacent sensor elements (20-1 and 20-2, 20-2 and 20-3) correspond to the points in time (tx), and
- the evaluation electronics (30) are further adapted to approximate a polynomial to the measurement range of each sensor element signal (40-1, 40-2, 40-3) from the time-signal value pairs and the associated determined magnetic encoder position by determining polynomial coefficients, and
- the evaluation electronics (30) are further designed to output position values of the encoder magnet (12) in an operating mode by means of the approximated polynomial via one of the sensor element signals (40-1, 40-2, 40-3).

6. Sensor according to claim 5, **characterized in that** the sensor elements are Hall sensor elements.

7. Sensor according to any of the preceding claims 5 or 6, **characterized in that** the sensor elements detect a radial component of the magnetic field.

8. Sensor according to one of the preceding claims 5 to 7, **characterized in that** the evaluation electronics is designed as an integrated circuit.

## Revendications

1. Procédé d'étalonnage d'un capteur magnétique (10) pour déterminer une position d'un aimant de codage (12) le long d'une trajectoire (AB), le capteur (10) comportant au moins trois éléments de capteur similaires (20, 20-1, 20-2, 20-3) le long de la trajectoire (AB), qui peuvent chacun détecter le champ magnétique de l'aimant de codage (12) à leur emplacement, et le capteur comportant une électronique d'évaluation (30), le procédé comprenant les étapes suivantes :
a) disposer les éléments capteurs (20-1, 20-2, 20-3) le long de la trajectoire à une distance équidistante,
b) déplacer l'aimant du codeur (12) le long de la trajectoire (AB),
c) détecter une composante du champ magnétique par les éléments de capteur (20-1, 20-2, 20-3) et générer un signal d'élément de capteur (40-1, 40-2, 40-3) à partir de chaque élément de capteur (20-1, 20-2, 20-3) par étapes espacées dans le temps (tx) en fonction de la position de l'aimant de codeur (12) et stocker les signaux d'élément de capteur (40-1, 40-2, 40-3),
d) dans lequel les formes d'onde de signal respectives (40-1, 40-2 et 40-3) ont une plage approximativement linéaire dans une plage partielle et cette plage est utilisée comme plage de mesure et dans lequel les éléments de capteur (20-1, 20-2, 20-3) sont agencés de telle sorte que des plages de mesure adjacentes sont adjacentes les unes aux autres de telle sorte que lorsque la position mesurée atteint l'extrémité d'une telle plage quasi-linéaire, alors la plage quasi-linéaire du capteur de Hall adjacent commence,
e) détecter des paires temps-valeur de signal dans les plages de mesure pendant le mouvement de l'aimant de codage (12) en mémorisant les instants (tx) auxquels le signal d'élément de capteur respectif (40-1, 40-2 ou 40-3) est détecté et en mémorisant le signal d'élément de capteur (Ux) associé à l'instant respectif (tx),
f) déterminer si l'aimant de codage (12) est déplacé devant les éléments de détection (20-1, 20-2, 20-3) à une vitesse constante,
g) et en présence d'une vitesse constante, déterminer quelles positions d'aimant de codeur entre chaque deux éléments de capteur adjacents (20-1 et 20-2 ; 20-2 et 20-3) correspondent aux points dans le temps (tx),
h) approximation d'un polynôme au signal d'élément de capteur (40-1, 40-2, 40-3) de chaque élément de capteur (20-1, 20-2, 20-3) dans les plages de mesure en déterminant des coefficients polynomiaux dans une course d'étalonnage de l'aimant permanent (12) à partir des paires de valeurs et des positions d'aimant de codeur associées respectives déterminées selon l'étape g).

2. Procédé selon la revendication 1, **caractérisé en ce que** les étapes e) à h) sont répétées en continu pendant une opération de travail en cours.

3. Procédé selon la revendication 2, **caractérisé en ce que** la fréquence de répétition est prédéterminée et de préférence réglable.

4. Procédé selon l'une des revendications précédentes, **caractérisé en ce que**, à l'étape f), on compare deux intervalles de temps (T1 et T2) pour déterminer une vitesse constante, les intervalles de temps étant calculés à chaque fois à partir d'une différence de temps entre deux instants appartenant à des signaux d'éléments capteurs de même amplitude provenant d'éléments capteurs voisins.

5. Capteur magnétique pour la mise en oeuvre d'un procédé selon l'une des revendications précédentes pour la détermination d'une position d'un aimant de capteur (12) le long d'une trajectoire (AB), le capteur (10) présentant le long de la trajectoire au moins trois éléments de capteur (20-1, 20-2, 20-3) similaires, qui peuvent chacun détecter le champ magnétique de l'aimant de capteur (12) à leur emplacement, et le capteur (10) ayant une électronique d'évaluation (30), les éléments de capteur (20-1, 20-2, 20-3) étant disposés à une distance équidistante le long du chemin (AB), et chaque élément de capteur (20-1, 20-2, 20-3) détecte une composante du champ magnétique et génère un signal d'élément de capteur (40-1, 40-2, 40-3) dépendant de la position de l'aimant de codage (12), comprenant une mémoire pour stocker les signaux d'élément de capteur (40-1, 40-2, 40-3), dans lequel les formes d'onde de signal respectives (40-1, 40-2 et 40-3) ont une plage approximativement linéaire dans une plage partielle et cette plage étant utilisée comme plage de mesure, et les éléments de capteur (20-1, 20-2, 20-3) étant disposés de telle sorte que des plages de mesure voisines sont contiguës de telle sorte que, lorsque la position mesurée atteint l'extrémité d'une telle plage quasi-linéaire, la plage quasi-linéaire du capteur de Hall voisin commence, dans lequel
- l'électronique d'évaluation (30) est conçue pour détecter et stocker des paires de valeurs de signaux temporels dans les plages de mesure pendant le mouvement de l'aimant de capteur (12), une paire de valeurs de signaux temporels se compose d'un temps (tx) auquel le signal d'élément de capteur respectif (40-1, 40-2, 40-3) est détecté et du signal d'élément de capteur associé (Ux) et
- l'électronique d'évaluation (30) est en outre conçue pour déterminer si l'aimant de capteur (12) est déplacé devant les éléments de capteur (20-1, 20-2, 20-3) à une vitesse constante et, si une vitesse constante est présente, pour déterminer quelles positions de l'aimant de capteur entre à chaque fois deux éléments de capteur adjacents (20-1 et 20-2, 20-2 et 20-3) correspondent aux points dans le temps (tx) et
- l'électronique d'évaluation (30) est en outre adaptée pour faire une approximation polynomiale de la plage de mesure de chaque signal d'élément de capteur (40-1, 40-2, 40-3) à partir des paires de valeurs temps-signal et de la position déterminée associée du codeur magnétique en déterminant des coefficients polynomiaux, et
- l'électronique d'évaluation (30) est en outre conçue pour délivrer des valeurs de position de l'aimant de codage (12) dans un mode de fonctionnement au moyen du polynôme approché par l'intermédiaire de l'un des signaux d'élément de capteur (40-1, 40-2, 40-3).

6. Capteur selon la revendication 5, **caractérisé en ce que** les éléments capteurs sont des éléments capteurs à effet Hall.

7. Capteur selon l'une quelconque des revendications précédentes 5 ou 6, **caractérisé en ce que** les éléments capteurs détectent une composante radiale du champ magnétique.

8. Capteur selon l'une des revendications précédentes 5 à 7, **caractérisé en ce que** électronique d'évaluation est conçue comme un circuit intégré.
